# EUROPÄISCHE PATENTSCHRIFT

(11) **EP 2 506 630 B1**
(45) Veröffentlichungstag und Bekanntmachung des Hinweises auf die Patenterteilung: **06.11.2019**
(21) Anmeldenummer: 12161648.6
(22) Anmeldetag: 28.03.2012
(51) Int. Cl.: H04W 28/06, H04L 29/06, H04L 29/08

(54) **Verfahren zum Optimieren von Übertragungsdaten sowie Optimierungseinrichtung**
Method for optimising transmission data and optimisation device
Procédé d'optimisation de données de transmission ainsi que le dispositif d'optimisation

(30) Priorität: 01.04.2011 DE 102011015801
(43) Veröffentlichungstag der Anmeldung: 03.10.2012
(73) Patentinhaber: Vodafone GmbH, 40549 Düsseldorf (DE)
(72) Erfinder: Nozulak, Thorsten, 45739 Oer-Erkenschwick (DE); Driesen, Ingo, 40489 Düsseldorf (DE)
(74) Vertreter: Müller & Schubert

(56) Entgegenhaltungen:
- US-A1- 2004 184 525
- US-A1- 2010 268 836
- XIAOLING QIU ET AL: "Adaptive video compression rate optimization in wireless access networks", LOCAL COMPUTER NETWORKS, 2009. LCN 2009. IEEE 34TH CONFERENCE ON, IEEE, PISCATAWAY, NJ, USA, 20. Oktober 2009 (2009-10-20), Seiten 420-427, XP031581476, ISBN: 978-1-4244-4488-5

## Beschreibung

Die vorliegende Erfindung betrifft zunächst ein Verfahren zum Optimieren von Übertragungsdaten gemäß dem Oberbegriff von Patentanspruch 1 sowie gemäß dem Oberbegriff von Patentanspruch 2. Weiterhin betrifft die Erfindung auch ein System, aufweisend eine Optimierungseinrichtung sowie ein elektronisches Endgerät, gemäß dem Oberbegriff von Patentanspruch 10.

Übertragungsdaten sind generell Daten, die zwischen elektronischen Geräten, beispielsweise Computern, Mobiltelefonen oder dergleichen übertragen werden. Dabei kann es erforderlich sein, dass die Übertragungsdaten im Hinblick auf die Übertragungswege, im Hinblick auf die elektronischen Endgeräte, im Hinblick auf die Übertragungsgeschwindigkeit, im Hinblick auf die Menge der übertragenen Daten beziehungsweise die Größe der übertragenen Dateien und der gleichen optimiert werden müssen. Bei einer Optimierungsvariante, die im weiteren Verlauf näher erläutert wird, ohne dass die Erfindung auf diese einzige Optimierungsvariante beschränkt wäre, handelt es sich um das Komprimieren von Daten.

Aktuell ist es üblich, dass eine so genannte statische Optimierung durchgeführt wird. Der Datenverkehr wird hierzu über einen Server, beispielsweise einen Performance Enhancement Server, geführt und optimiert, das heißt komprimiert. Bei der statischen Optimierung werden die Optimierungseinstellungen beziehungsweise Komprimierungseinstellungen für alle Übertragungsdaten, beispielsweise Bilder und Videos, gleichermaßen angewendet und es erfolgt keine angepasste Optimierung für unterschiedliche Ursprungsqualitäten.

Die statische Optimierung wendet beispielsweise für alle Übertragungsdaten, etwa für alle Bilder und Videos, den gleichen Komprimierungsfaktor an, unabhängig davon, welche Qualität das Ursprungsformat hat. Dabei werden die Ursprungsqualitäten nicht berücksichtigt. Generell ist allerdings bereits bekannt, dass verschiedene Kompressionsfaktoren für unterschiedliche Dateiformate genutzt werden, zum Beispiel alle Bitmaps 20% und alle JPEGS 10%. Innerhalb der einzelnen Dateiformate gibt es dann aber wiederum immer nur ein und denselben Kompressionsfaktor, ohne Berücksichtigung der Ursprungsqualitäten.

Bei guten Ursprungsqualitäten bei Übertragungsdaten, etwa Bildern und Videos, wird durch die angewendete Komprimierung die Qualität für das menschliche Auge lediglich in zumutbarer Qualität komprimiert. Übertragungsdaten, etwa Bilder und Videos von schlechter Qualität werden jedoch gleichermaßen komprimiert, was in diesem Fall zu sehr schlechten Qualitätsergebnissen führt.

In der US 2004/0184525 A1 ist eine Lösung beschrieben, mit der ein übertragenes Multimediasignal optimiert wird. Bevor das Signal übertragen wird, wird eine Übertragungsrate für das Signal bestimmt. Es sind verschiedene Kompressionsverfahren für verschiedene Übertragungsraten vorhanden. Entsprechend einer ausgewählten Übertragungsrate wird das Multimediasignal dann optimiert. Nachteilig bei dieser bekannten Lösung ist, dass diese Optimierung nicht durch das Endgerät, welches die Übertragungsdaten erhält, initiiert wird.

Der vorliegenden Erfindung liegt die Aufgabe zugrunde, ein Verfahren sowie eine Optimierungseinrichtung der eingangs genannten Art derart weiterzubilden, dass eine auf die übertragenen Übertragungsdaten bezogene individuelle, das heißt somit eine dynamische, Optimierung, insbesondere Komprimierung der Übertragungsdaten vorgenommen werden kann.

Diese Aufgabe wird erfindungsgemäß gelöst durch das Verfahren mit den Merkmalen gemäß dem unabhängigen Patentanspruch 1, das Verfahren mit den Merkmalen gemäß dem unabhängigen Patentanspruch 2 sowie durch das System, aufweisend eine Optimierungseinrichtung sowie ein elektronisches Endgerät, mit den Merkmalen gemäß dem unabhängigen Patentanspruch 10. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, und umgekehrt, so dass hinsichtlich der beiden Erfindungsaspekte wechselseitig vollinhaltlich Bezug genommen und verwiesen wird.

Gemäß dem ersten Aspekt der Erfindung wird ein Verfahren zum Optimieren, insbesondere Komprimieren, von Übertragungsdaten bereitgestellt, welches die Merkmale des unabhängigen Patentanspruchs 1 aufweist. Gemäß dem zweiten Aspekt der Erfindung wird ein Verfahren zum Optimieren, insbesondere Komprimieren, von Übertragungsdaten bereitgestellt, welches die Merkmale des unabhängigen Patentanspruchs 2 aufweist.

Gemäß der vorliegenden Erfindung wird ein Verfahren zum Optimieren von Übertragungsdaten bereitgestellt. Das bedeutet insbesondere, dass die Übertragungsdaten für die Übertragung und das Handling bestmöglich aufbereitet oder angepasst werden. Dabei ist die Erfindung grundsätzlich nicht auf bestimmte Arten der Optimierung beschränkt. Bevorzugt ist vorgesehen, dass das Verfahren zum Komprimieren von Übertragungsdaten ausgebildet ist. Komprimieren von Daten bedeutet insbesondere, dass die Datenmenge reduziert wird. Es handelt sich hierbei insbesondere um ein Verfahren, mit dem Speicherplatz eingespart werden kann und/oder mit dem die Übertragungszeit von Daten zwischen zwei Endgeräten, beispielsweise Computern, reduziert werden kann. Im Folgenden wird die Erfindung zur besseren Verdeutlichung bevorzugt im Zusammenhang mit dem Komprimieren beschrieben, wobei die Erfindung nicht auf diese konkrete Anwendung beschränkt ist.

Mit dem Verfahren sollen Übertragungsdaten optimiert werden. Übertragungsdaten zeichnen sich dadurch aus, dass sie von einem Endgerät auf ein anderes Endgerät, beispielsweise von einem Computer auf einen anderen Computer übertragen werden können. Bevorzugt kann vorgesehen sein, dass die Übertragungsdaten geeignet sind, um von einem Computer auf ein elektronisches Endgerät in Form eines Mobiltelefons übertragen werden können. In diesem Fall befindet sich die Datenquelle auf dem Computer, während sich das Datenziel im elektronischen Endgerät, etwa dem Mobiltelefon, befindet.

Es ist durchaus denkbar, dass das Verfahren nicht nur im Downlink, sondern durchaus auch im Uplink eingesetzt wird. Bevorzugt ist der Einsatz des Verfahrens im Downlink, so dass die Erfindung nachfolgend anhand dieser Verfahrensvariante bevorzugt beschrieben wird. Dabei ist die Erfindung nicht auf diese konkrete Anwendungsform beschränkt.

Dabei ist die Erfindung grundsätzlich nicht auf bestimmte Typen von Übertragungsdaten beschränkt. Beispielsweise kann es sich bei den Übertragungsdaten um Bilddaten und/oder Videodaten und/oder Audiodaten und/oder Applet-Daten und/oder Animationsdaten handeln, so dass das erfindungsgemäße Verfahren zur Optimierung solcher Übertragungsdaten ausgebildet ist. Bevorzugt kann das Verfahren zur Optimierung, insbesondere Komprimierung von Bildern und/oder Videos ausgebildet sein.

Gemäß der vorliegenden Erfindung werden die Übertragungsdaten in einem Kommunikationsnetz übertragen. Dabei ist die Erfindung grundsätzlich nicht auf bestimmte Typen von Kommunikationsnetzen beschränkt. Beispielsweise kann ein Kommunikationsnetz ein Mobilfunknetz sein. Natürlich ist es auch möglich, dass das Kommunikationsnetz weitere Komponenten umfasst, beispielsweise das Internet. Bevorzugt ist vorgesehen, dass die Übertragungsdaten aus dem Internet oder über das Internet auf ein elektronisches Endgerät übertragen werden, welches einem Mobilfunknetz zugeordnet ist.

Dabei werden die Übertragungsdaten von einer Datenquelle über eine Datenverbindung zu einem Datenziel in einem elektronischen Endgerät übertragen. Eine Datenquelle ist dabei insbesondere ein Ort, an dem die Übertragungsdaten zur Übertragung bereitgestellt werden. Beispielsweise kann sich die Datenquelle in einem Computer, einem Server oder dergleichen befinden.

Die Daten werden dann über eine Datenverbindung zu einem Datenziel übertragen. Dabei ist die Erfindung grundsätzlich nicht auf bestimmte Typen von Datenverbindungen beschränkt. Beispielsweise kann es sich bei einer Datenverbindung um einen Datenkanal handeln. Bevorzugt ist eine Ausführungsform, bei der die Übertragung der Übertragungsdaten über einen nativen Signalisierungskanal erfolgt.

Das Datenziel ist insbesondere ein Ort, zu dem die Übertragungsdaten übertragen werden sollen. Ein solches Datenziel befindet sich beispielsweise in einem elektronischen Endgerät, oder es wird durch ein elektronisches Endgerät gebildet. Dabei ist die Erfindung nicht auf bestimmte Typen von elektronischen Endgeräten beschränkt. Wenn auf Seiten des Kommunikationsnetzes ein Mobilfunknetz involviert ist, kann es sich bei dem elektronischen Endgerät beispielsweise um ein dem Mobilfunknetz zugeordnetes Mobiltelefon oder dergleichen handeln, In weiterer Ausgestaltung kann das elektronische Endgerät in Form eines tragbaren Computers oder dergleichen ausgebildet sein, der dann insbesondere ein Kommunikationsmodul für eine Kommunikation in einem Kommunikationsnetz, beispielsweise einem Mobilfunknetz, aufweist.

Weiterhin ist vorgesehen, dass zwischen der Datenquelle und dem Datenziel eine Optimierungseinrichtung vorgesehen ist. Diese Optimierungseinrichtung hat die Aufgabe, dass die Übertragungsdaten der Datenquelle optimiert, insbesondere komprimiert, werden. Die Übertragungsdaten werden von der Datenquelle zunächst zu der Optimierungseinrichtung übertragen und dort optimiert, beispielsweise komprimiert. In optimierter, insbesondere komprimierter Form werden die Übertragungsdaten dann von der Optimierungseinrichtung zu dem Datenziel übertragen, welches sich in einem elektronischen Endgerät befindet. Hierzu weist die Optimierungseinrichtung sowohl eine Schnittstelle zu der Datenquelle als auch eine Schnittstelle zu dem Datenziel beziehungsweise dem elektronischen Endgerät auf.

Erfindungsgemäß ist nunmehr vorgesehen, dass die vorstehend beschriebene Prozedur um weitere Aspekte erweitert wird, die eine individuelle, insbesondere dynamische Optimierung, beispielsweise Komprimierung, der Übertragungsdaten ermöglichen.

Dazu ist vorgesehen, dass bei den Übertragungsdaten vor deren Optimierung, insbesondere Komprimierung, ein Daten-Qualitätsanalyseprozess durchgeführt wird. Das bedeutet, dass zunächst die Qualität der Übertragungsdaten analysiert wird. Dabei geht es im vorliegenden Fall nicht in erster Linie darum, die Relevanz und Korrektheit der Übertragungsdaten zu bestimmen. Vielmehr soll mit dem Daten-Qualitätsanalyseprozess insbesondere analysiert werden, ob die Eigenschaften und Merkmale der Übertragungsdaten bezüglich ihrer Eignung festgelegte und/oder vorausgesetzte Erfordernisse erfüllen. Dabei spielen insbesondere Störeinflüsse, die Präzision bei der Übertragung der Daten, die Dateigröße und dergleichen eine Rolle.

Die Übertragungsdaten können auf unterschiedliche Weise analysiert werden, so dass die Erfindung nicht auf bestimmte Qualitätsanalyseprozesse beschränkt ist. Einige vorteilhafte, jedoch nicht ausschließliche Beispiele werden im weiteren Verlauf der Beschreibung näher erläutert.

Auf Basis der durchgeführten Daten-Qualitätsanalyse wird dann ein auf die Übertragungsdaten bezogener individueller Optimierungsgrad, insbesondere Komprimierungsgrad, von der Optimierungseinrichtung ermittelt. Von dem Begriff Optimierungsgrad ist insbesondere auch der Umfang der für die Übertragungsdaten individuell möglichen Optimierung, der Optimierungsfaktor, die Optimierungsrate und dergleichen mit umfasst. Wie dies im Einzelnen geschehen kann, wird anhand bevorzugter Ausführungsformen weiter unten näher erläutert.

Anschließend werden die Übertragungsdaten, die von der Datenquelle zur Optimierungseinrichtung übertragen worden sind, anhand des bestimmten individuellen Optimierungsgrads, insbesondere Kompressionsgrads, in der Optimierungseinrichtung komprimiert. Die so komprimierten Übertragungsdaten werden dann zu dem Datenziel, beispielsweise zu dem elektronischen Endgerät übertragen.

Durch das erfindungsgemäße Verfahren können Übertragungsdaten, beispielsweise Bilddaten und/oder Videodaten, bei, insbesondere mobilen, Datenverbindungen optimiert werden, in dem diese Daten beispielsweise in geeigneter Weise komprimiert werden. Dadurch kann die Qualität bei Optimierungen, beispielsweise Komprimierungen, von solchen Übertragungsdaten verbessert werden.

Der Kern der vorliegenden Erfindung besteht insbesondere darin, beim Einsatz von Optimierungen und Komprimierungen, insbesondere im mobilen Umfeld, die Ursprungsqualität der Übertragungsdaten, etwa der Bilder und/oder Videos, zu berücksichtigen und eine angepasste Optimierung beziehungsweise Komprimierung durchzuführen. Dies bedeutet, dass Übertragungsdaten, beispielsweise Bilder und/oder Videos mit sehr guter Ursprungsqualität stärker komprimiert werden können oder sollten als Übertragungsdaten von mittlerer Qualität. Übertragungsdaten von schlechter Qualität können oder sollten noch weniger, eventuell auch gar nicht weiter komprimiert werden.

Durch die vorliegende Erfindung wird es möglich, dass der Grad der Optimierung für die jeweils übertragenen Übertragungsdaten jeweils individuell und auf die tatsächlich übertragenen Übertragungsdaten bezogen vorgenommen wird. Im Vergleich zu der eingangs beschriebenen statischen Optimierung handelt es sich bei der vorliegenden Erfindung um eine dynamische Optimierung.

Dabei ist es ein wesentliches Merkmal der vorliegenden Erfindung, dass von der Optimierungseinrichtung zunächst die Qualität der zu übertragenen Übertragungsdaten, bei denen es sich um die Ursprungsdaten handelt, ermittelt wird. Auf Basis dieser Qualitätsanalyse wird dann für die überprüften Übertragungsdaten individuell festgelegt, in welcher Weise, beispielsweise in welchem Umfang eine Optimierung, beispielsweise eine Komprimierung, vorgenommen wird. Aufgrund dieser Resultate wird anschließend die Optimierung vorgenommen.

Die Optimierung, insbesondere Komprimierung, der Übertragungsdaten in der Optimierungseinrichtung erfolgt auf Anforderung. Insbesondere ist dabei vorgesehen, dass die Anforderung von Seiten des elektronischen Endgeräts an die Optimierungseinrichtung gerichtet wird. Die Initiierung der Optimierung erfolgt dann von Seiten des elektronischen Endgeräts.

Bevorzugt kann die Optimierungseinrichtung auf eine Optimierungsdatei zugreifen, in der Daten-Qualitätsreferenzwerte mit bestimmten Optimierungsgraden verknüpft sind. Eine solche Optimierungsdatei kann beispielsweise in einer internen Datenbank der Optimierungseinrichtung abgelegt sein. In anderer Ausgestaltung kann die Optimierungsdatei in einer zur Optimierungseinrichtung externen Datenbank abgelegt sein. Die Optimierungseinrichtung kann dann auf die externe Datenbank zugreifen, wozu die Optimierungseinrichtung bevorzugt eine entsprechende Schnittstelle aufweist. Die Optimierungseinrichtung vergleicht die bei der Daten-Qualitätsanalyse der Übertragungsdaten ermittelten Daten-Qualitätswerte mit den Daten-Qualitätsreferenzwerten. Bei Übereinstimmung eines ermittelten Daten-Qualitätswerts mit einem Daten-Qualitätsreferenzwert werden die Übertragungsdaten anhand des dem Daten-Qualitätsreferenzwert zugeordneten Optimierungsgrads optimiert.

Erfindungsgemäß ist vorgesehen, dass von dem elektronischen Endgerät oder einer dem elektronischen Endgerät zugeordneten Applikation ein Triggersignal zum Starten des Optimierungsverfahrens erzeugt wird. Dabei kann eine Applikation beispielsweise in dem elektronischen Endgerät implementiert sein und/oder auf diesem ablaufen. Auch könnte die Applikation auf einem anderem, zweiten elektronischen Endgerät, beispielsweise einem Computer, ablaufen, wobei das Optimierungsverfahren dann aber trotzdem in Bezug auf das erstere elektronische Endgerät durchgeführt wird. Das Triggersignal, das eine Art Auslösesignal sein kann, wird an die Optimierungseinrichtung übertragen. Nachdem, vorzugsweise erst nachdem, die Optimierungseinrichtung das Triggersignal erhalten hat, wird das wie vorstehend beschriebene Optimierungsverfahren durchgeführt. Auf diese Weise hat der Nutzer die Möglichkeit zu bestimmen, ob und wann er bezüglich seines elektronischen Endgeräts das Optimierungsverfahren durchführen möchte.

In weiterer Ausgestaltung kann vorgesehen sein, dass von dem elektronischen Endgerät oder einer dem elektronischen Endgerät zugeordneten, insbesondere in der wie vorstehend beschriebenen Weise zugeordnete, Applikation ein Wert für einen Optimierungsgrad für die Übertragungsdaten ermittelt wird. Hierbei kann beispielsweise ein Durchschnittswert festgelegt werden. Der Wert für den Optimierungsgrad wird an die Optimierungseinrichtung übertragen. Nach Empfang des Optimierungsgrads in der Optimierungseinrichtung werden die Übertragungsdaten in Relation zu dem übertragenen Optimierungsgrad optimiert. Der von dem oder für das elektronische Endgerät festgelegte Optimierungsgrad kann beispielsweise einen für das elektroni9sche Endgerät bevorzugten Optimierungsgrad, einen maximal zulässigen Optimierungsgrad, einen minimal zulässigen Optimierungsgrad und der gleichen darstellen. Die Übertragungsdaten werden, unter Verwendung eines Daten-Qualitätsanalyseprozesses, in der wie weiter oben beschriebenen Weise analysiert. Auf den Analyseergebnissen wird dann eine entsprechende Optimierung der Übertragungsdaten vorgenommen. Durch den gesetzten Optimierungsgrad wird aber sichergestellt, dass maximal bis zu dem vorgegebenen Optimierungsgrad optimiert wird. Dadurch kann verhindert werden, dass von Seiten der Optimierungseinrichtung eine Optimierung der Übertragungsdaten vorgenommen wird, die für das betreffende elektronische Endgerät nicht geeignet ist.

Insbesondere kann der dynamische Optimierungsgrad einmalig zu Beginn einer Verbindung vom elektronischen Endgerät an die Optimierungseinrichtung gesendet und dort gespeichert werden, beispielsweise bis der Nutzer über das Endgerät eine Änderung vornimmt. Der Nutzer gibt somit eingangs das gewünschte Optimierungsresultat an.

Bei dem Verfahren gemäß dem ersten Erfindungsaspekt wird in der Optimierungseinrichtung auf Basis der durchgeführten Daten-Qualitätsanalyse zunächst ein Wert für einen Optimierungsgrad für die Übertragungsdaten ermittelt. Dieser Wert für den Optimierungsgrad wird dann von der Optimierungseinrichtung an das elektronische Endgerät übertragen. Vom elektronischen Endgerät wird anschließend eine Anforderungsinformation an die Optimierungseinrichtung übertragen. Diese Anforderungsinformation beinhaltet insbesondere, dass eine Optimierung der Übertragungsdaten von der Optimierungseinrichtung anhand des ermittelten Werts für den Optimierungsgrad vorgenommen werden soll. Nach Empfang der Anforderungsinformation werden die Übertragungsdaten anhand des ermittelten Werts für den Optimierungsgrad optimiert. Die optimierten Übertragungsdaten werden anschließend zum Datenziel, etwa im elektronischen Endgerät, übertragen.

Bei dem Verfahren gemäß dem zweiten Erfindungsaspekt wird der während der Daten-Qualitätsanalyse ermittelte Daten-Qualitätswert der Übertragungsdaten von der Optimierungseinrichtung zunächst an das elektronische Endgerät übertragen. Gemäß dieser Ausführungsform ist dann vorgesehen, dass im elektronischen Endgerät ein auf die Übertragungsdaten bezogener individueller Optimierungsgrad ermittelt wird. Das Endgerät ermittelt diesen individuellen Optimierungsgrad insbesondere auch basierend auf den Resultaten der Daten-Qualitätsanalyse. Dabei können auch spezifische Eigenschaften des elektronischen Endgeräts berücksichtigt werden. Der individuelle Optimierungsgrad wird dann vom elektronischen Endgerät zu der Optimierungseinrichtung übertragen. Nach Empfang des individuellen Optimierungsgrads werden die Übertragungsdaten in der Optimierungseinrichtung anhand des individuellen Optimierungsgrads optimiert. Die optimierten Übertragungsdaten werden anschließend zum Datenziel, etwa im elektronischen Endgerät, übertragen.

Bevorzugt können mehrere unterschiedliche Sätze von Übertragungsdaten, insbesondere gleichzeitig, von der Datenquelle zur Optimierungseinrichtung übertragen und dort optimiert werden, wobei die unterschiedlichen Übertragungsdaten jeweils anhand eines eigenen bestimmten individuellen Optimierungsgrads optimiert werden. Dies soll nachfolgend anhand eines vorteilhaften, jedoch nicht ausschließlichen Beispiels verdeutlicht werden.

Beispielsweise kann vorgesehen sein, dass mehrere Bilder von einer Webseite aus dem Internet auf ein elektronisches Endgerät, beispielsweise in Mobiltelefon, heruntergeladen werden. Jedes Bild stellt dabei einen Satz Übertragungsdaten dar. Dabei kann natürlich die Situation auftreten, dass die unterschiedlichen Bilder, das heißt Sätze an Übertragungsdaten, unterschiedliche Qualitäten aufweisen. Es kann nun für jeden Satz Übertragungsdaten individuell dessen Qualität ermittelt und somit für jeden Satz Übertragungsdaten jeweils ein eigener, auf diesen Satz Übertragungsdaten bezogener individueller Optimierungsgrad ermittelt werden. Somit können die unterschiedlichen Sätze an Übertragungsdaten, beispielsweise die unterschiedlichen Bilder, jeweils unterschiedlich optimiert werden. Es werden somit unterschiedliche, individuelle Optimierungsgrade in einem Übertragungsvorgang berücksichtigt.

Bevorzugt kann die Übertragung der Übertragungsdaten über einen Server geführt werden, wobei die Optimierungseinrichtung Bestandteil des Servers ist. Dieser Server kann beispielsweise einem Kommunikationsnetz, beispielsweise einem Mobilfunknetz zugeordnet sein und vom Kommunikationsnetzbetreiber betrieben werden. In anderer Ausgestaltung kann vorgesehen sein, dass die Übertragung der Übertragungsdaten direkt zwischen der Datenquelle und dem elektronischen Endgerät erfolgt. In diesem Fall kann die Optimierungseinrichtung Bestandteil der Datenquelle und/oder des elektronischen Endgeräts sein.

Wie weiter oben bereits ausgeführt wurde, ist die vorliegende Erfindung nicht auf bestimmte Arten von Daten-Qualitätsanalyseprozessen beschränkt.

Beispielsweise kann der Daten-Qualitätsanalyseprozess in Form eines Bildanalyseprozesses ausgebildet sein. Insbesondere kann hierzu ein digitales Bildanalyseverfahren zum Einsatz kommen. Dies kann beispielsweise unter Verwendung geeigneter Bildanalysealgorithmen realisiert werden. Derartige Verfahren sind im Stand der Technik bereits auf vielfältige Weise bekannt und dem Fachmann geläufig. Natürlich sind auch andere Formen von Daten-Qualitätsanalyseprozessen möglich. Beispielsweise kann der Daten-Qualitätsanalyseprozess auch in Form eines Prozesses zur Analyse der Auflösung und/oder eines Prozesses zur Analyse der Dateigröße und/oder eines Prozesses zur Analyse der Übertragungsrate ausgebildet sein. Die Beurteilung der Qualität kann grundsätzlich mit beliebigen Methoden vorgenommen werden. Als einfache Beispiele seien hier - insbesondere bei Bildern und Videos - die Auflösung, die Dateigröße, die Übertragungsrate oder dergleichen genannt.

Bei der vorgenannten Qualitätsanalyse können zudem auch noch weitere Parameter berücksichtigt werden. Zu nennen sind hierbei beispielsweise der Übertragungsstandard, die Art und Beschaffenheit der Datenverbindung, beispielsweise des Datenkanals, der Typus des elektronischen Endgeräts, die zur Verfügung stehende Speicherkapazität, der Zeitpunkt der Übertragung, und dergleichen.

Gemäß einem weiteren Aspekt der vorliegenden Erfindung wird ein System, aufweisend eine Optimierungseinrichtung und ein elektronisches Endgerät bereitgestellt, welches die Merkmale des unabhängigen Patentanspruchs 10 aufweist.

Die Optimierungseinrichtung kann beispielsweise in einem Server oder im elektronischen Endgerät vorgesehen sein.

Das System ist zur Durchführung der wie vorstehend beschriebenen erfindungsgemäßen Verfahren ausgebildet, so dass auf die entsprechenden Ausführungen weiter oben vollinhaltlich Bezug genommen und verwiesen wird.

Die vorliegende Erfindung, wie sie anhand der beiden Erfindungsaspekte vorstehend beschrieben worden ist, ermöglicht insbesondere eine Art qualitätsbasierter Optimierung. Dabei geht es insbesondere um die Möglichkeit der Übertragung von Übertragungsdaten auf ein elektronisches, beispielsweise mobiles, Endgerät. Beispielsweise geht es um die Übertragung und gegebenenfalls auch Darstellung von Bildern und/oder Videos auf ein solches elektronisches Endgerät oder auf einem solchen elektronischen Endgerät.

Dies soll anhand eines auf Übertragungsdaten in Form von Bildern oder Videos gerichteten Beispiels exemplarisch verdeutlicht werden. Bisher werden bei einem Download von Bildern oder Videos auf ein elektronisches Endgerät all diese Übertragungsdateien ein und demselben Optimierungsverfahren, beispielsweise Kompressionsverfahren, unterzogen. Dies geschieht ungeachtet der Tatsache, welche Qualität ein solches Bild oder ein Video bereits aufweist. Das heißt, ein schlechtes Bild wird durch die Optimierung, beispielsweise Kompression, noch schlechter.

An diesem Punkt setzt nun die erfinderische Idee an. Eine Optimierungseinrichtung, die beispielsweise in einem Server in einem Mobilfunknetz vorgesehen sein kann oder durch einen solchen Server gebildet wird, wird genutzt, um die im Original existierende Qualität des Bildes oder Videos zu überprüfen. Nach der Analyse findet dann ein angepasstes Optimieren, beispielsweise Komprimieren statt: Das heißt beispielsweise, dass bei hoher Qualität eine hohe Optimierungsrate, beispielsweise Kompressionsrate, bei niedriger Qualität eine niedrige oder gar keine Optimierung, beispielsweise Kompression, angewendet wird.

Durch die vorliegende Erfindung können eine Reihe von Vorteilen realisiert werden. Beispielsweise kann eine deutliche Verbesserung der Anzeigequalität von Übertragungsdaten, beispielsweise von Bildern und Videos, realisiert werden. Darüber hinaus ergibt sich ein großes Datenmengeneinsparpotential bei Übertragungsdaten, beispielsweise Bildern und Videos, mit hoher Ursprungsqualität.

Die Erfindung wird nun anhand von Ausführungsbeispielen unter Bezugnahme auf die beiliegenden Zeichnungen in größerem Detail erläutert. Es zeigen
- Figur 1: in schematischer Darstellung den Unterschied zwischen der aus dem Stand der Technik bekannten statischen Optimierung und der erfindungsgemäßen Lösung; und
- Figur 2: ein erfindungsgemäßes Graphical User Interface (GUI) für die Optimierung von Einstellungen.

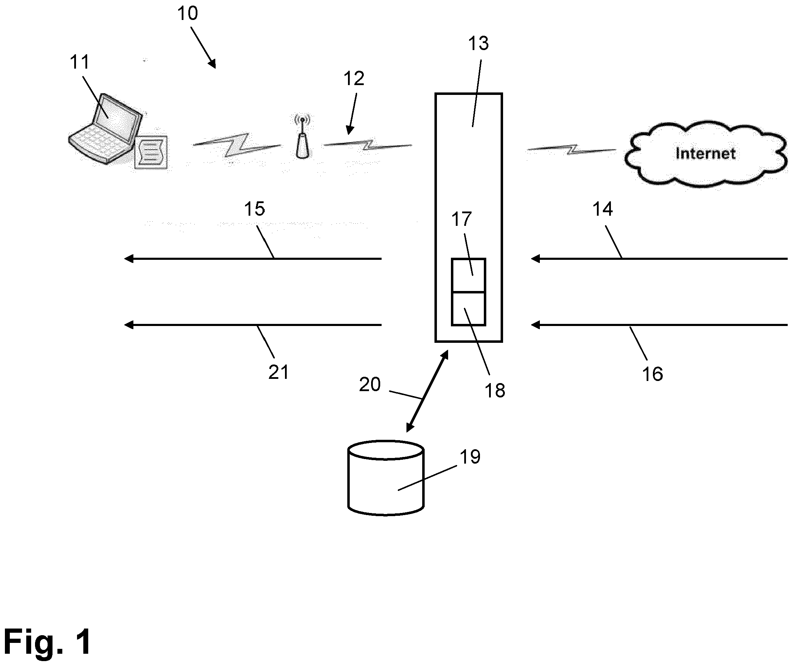

In Figur 1 ist der Unterschied zwischen dem heutigen Stand der Technik in Form einer statischen Optimierung und der hier beschriebenen Erfindung dargestellt. In einem Kommunikationsnetzwerk 10, beispielsweise einem Mobilfunknetzwerk, kommuniziert ein elektronisches Endgerät 11, beispielsweise ein mit einem Kommunikationsmodul ausgestatteter Computer oder ein Mobiltelefon, über eine Datenübertragungsverbindung 12, beispielsweise einen Datenkanal, über einen Server, beispielsweise einen Performance Enhancement Proxy Server (PEP), mit dem Internet. Der Server stellt eine Optimierungseinrichtung 13 dar, mit der aus dem Internet herunter geladene Übertragungsdaten optimiert, beispielsweise komprimiert werden können.

Zunächst wird das aus dem Stand der Technik bekannte statische Komprimierungsverfahren beschrieben. Übertragungsdaten, die im vorliegenden Ausführungsbeispiel als Bilder oder Videos ausgebildet sind, werden von einer nicht näher dargestellten Datenquelle aus dem Internet auf die Optimierungseinrichtung 13 übertragen, was durch den Pfeil 14 verdeutlicht ist. In der Optimierungseinrichtung 13 werden die Übertragungsdaten komprimiert. Bei der aus dem Stand der Technik bekannten statischen Optimierung werden die Optimierungseinstellungen beziehungsweise Komprimierungseinstellungen für alle Übertragungsdaten, beispielsweise Bilder und Videos, gleichermaßen angewendet und es erfolgt keine angepasste Optimierung für unterschiedliche Ursprungsqualitäten. Die statische Optimierung wendet beispielsweise für alle Übertragungsdaten, etwa für alle Bilder und Videos, den gleichen Komprimierungsfaktor an, unabhängig davon, welche Qualität das Ursprungsformat hat. Die optimierten, das heißt komprimierten Übertragungsdaten werden anschließend von der Optimierungseinrichtung 13 zu dem elektronischen Endgerät 11 übertragen, was durch den Pfeil 15 verdeutlicht ist.

Im unteren Bereich von Figur 1 ist nun der Ablauf des erfindungsgemäßen Verfahrens dargestellt. Erfindungsgemäß ist nunmehr vorgesehen, dass die vorstehend beschriebene Prozedur um weitere Aspekte erweitert wird, die eine individuelle, insbesondere dynamische Optimierung, beispielsweise Komprimierung, der Übertragungsdaten ermöglichen.

Wiederum werden Übertragungsdaten, die im vorliegenden Ausführungsbeispiel als Bilder oder Videos ausgebildet sind, von einer nicht näher dargestellten Datenquelle aus dem Internet auf die Optimierungseinrichtung 13 übertragen, was durch den Pfeil 16 verdeutlicht ist.

Nunmehr ist vorgesehen, dass bei den Übertragungsdaten vor deren Optimierung, insbesondere Komprimierung, ein Daten-Qualitätsanalyseprozess durchgeführt wird. Das bedeutet, dass zunächst die Qualität der Übertragungsdaten analysiert wird. Dazu ist in der Optimierungseinrichtung 13 eine Einrichtung 17 zum Durchführen einer Daten-Qualitätsanalyse der empfangenen Übertragungsdaten vor deren Optimierung, insbesondere Komprimierung, vorgesehen. Die Beurteilung der Qualität kann grundsätzlich mit beliebigen Methoden vorgenommen werden. Als einfache Beispiele seien hier die Auflösung, die Dateigröße oder die Übertragungsrate genannt.

Weiterhin weist die Optimierungseinrichtung 13 eine Einrichtung 18 zum Bestimmen eines individuellen Optimierungsgrads, insbesondere Kompressionsgrads für die Übertragungsdaten anhand der ermittelten Daten-Qualitätsanalysewerte auf.

Auf Basis der durchgeführten Daten-Qualitätsanalyse wird dann ein auf die Übertragungsdaten bezogener individueller Optimierungsgrad, insbesondere Komprimierungsgrad, von der Optimierungseinrichtung 13 ermittelt.

Dazu greift die Optimierungseinrichtung 13 auf eine Optimierungsdatei zu, in der Daten-Qualitätsreferenzwerte mit bestimmten Optimierungsgraden verknüpft sind. Eine solche Optimierungsdatei kann beispielsweise in einer zur Optimierungseinrichtung 13 externen Datenbank 19 abgelegt sein. Die Optimierungseinrichtung 13 kann dann auf die externe Datenbank 19 zugreifen, was durch den Pfeil 20 gekennzeichnet ist. Die Optimierungseinrichtung 13 vergleicht durch die Einrichtung 17 die bei der Daten-Qualitätsanalyse der Übertragungsdaten ermittelten Daten-Qualitätswerte mit den Daten-Qualitätsreferenzwerten. Bei Übereinstimmung eines ermittelten Daten-Qualitätswerts mit einem Daten-Qualitätsreferenzwert wird über die Einrichtung 18 der entsprechende Optimierungsgrad ermittelt. Anschließend werden die Übertragungsdaten anhand des dem Daten-Qualitätsreferenzwert zugeordneten Optimierungsgrads optimiert.

Die so komprimierten Übertragungsdaten werden dann zu dem Datenziel, beispielsweise zu dem elektronischen Endgerät 11 übertragen, was durch den Pfeil 21 verdeutlicht ist.

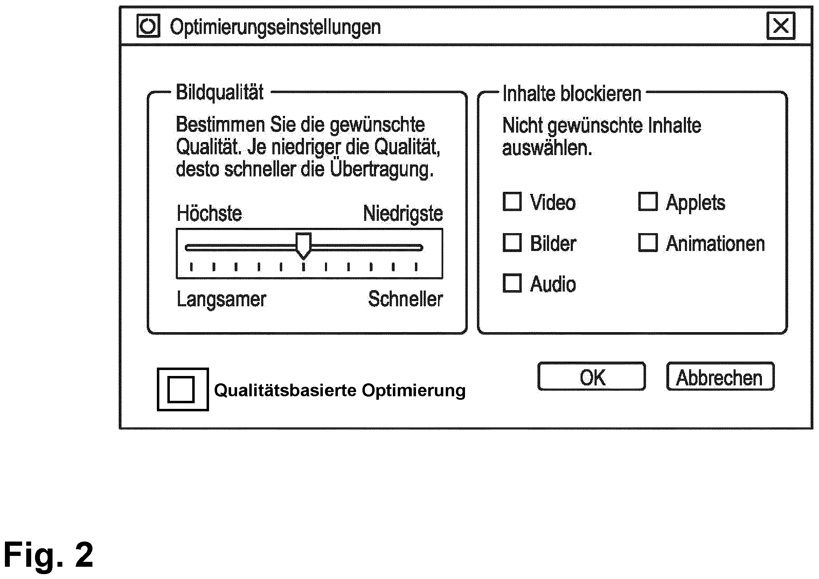

Die Darstellung in Figur 2 zeigt eine GUI (Graphical User Interface) zur Ansteuerung des in Figur 1 genannten elektronischen Endgeräts 11.

Es ist zu erkennen, dass die Einstellungen gleichsam für alle Verbindungstypen gelten. Wie in der Beschreibungseinleitung weiter oben bereits erwähnt, kann: den hier dargestellten Kompressionsstufen im Hintergrund je Dateityp feste Komprimierungsfaktoren zugewiesen werden, beispielsweise Mittel: BMP:20% und JPEG: 10%:
Das heißt, die Bildqualität ist für alle Datenübertragungsgeschwindigkeiten gleich. Dies führt zu folgenden Problemen: Im Falle einer hohen Datenübertragungsgeschwindigkeit wird nicht die optimale Bildqualität angeboten. Im Falle einer niedrigen Datenübertragungsgeschwindigkeit dauert der WebSeiten-Aufbau länger, da die Bildqualität nicht weiter reduziert wird. Aufgrund der mittleren Bildqualität als Voreinstellung wird die Optimierung oft vom Nutzer direkt auf die höchste Stufe geändert, was beispielsweise negative Auswirkung auf Netzkapazität hat.

Erfindungsgemäß ist nun eine Erweiterung der GUI vorgesehen. Durch den Button oder die Schaltfläche "Qualitätsbasierte Optimierung" kann nunmehr das oben beschriebene erfindungsgemäße Verfahren zur individuellen Optimierung, insbesondere Komprimierung der Übertragungsdaten aktiviert werden. Beispielsweise kann vorgesehen sein, dass von dem elektronischen Endgerät mittels der Schaltfläche "Qualitätsbasierte Optimierung" ein Triggersignal zum Starten des Optimierungsverfahrens erzeugt und an die in Figur 1 dargestellte Optimierungseinrichtung 13 übertragen wird. Nachdem die Optimierungseinrichtung 13 das Triggersignal erhalten hat, wird das wie vorstehend beschriebene Optimierungsverfahren durchgeführt.

### Bezugszeichenliste

- 10: Kommunikationsnetzwerk (Mobilfunknetzwerk)
- 11: Elektronisches Endgerät
- 12: Datenübertragungsverbindung (Datenkanal)
- 13: Optimierungseinrichtung
- 14: Übertragung der Übertragungsdaten von einer Datenquelle zu der Optimierungseinrichtung
- 15: Übertragung der optimierten Übertragungsdaten von der Optimierungseinrichtung zum elektronischen Endgerät
- 16: Übertragung der Übertragungsdaten von einer Datenquelle zu der Optimierungseinrichtung
- 17: Einrichtung zur Durchführung einer Daten-Qualitätsanalyse der empfangenen Übertragungsdaten
- 18: Einrichtung zum Bestimmen eines individuellen Optimierungsgrads, für die Übertragungsdaten
- 19: Datenbank
- 20: Kommunikationsverbindung zwischen Optimierungseinrichtung und Datenbank
- 21: Übertragung der optimierten Übertragungsdaten von der Optimierungseinrichtung zum elektronischen Endgerät

## Patentansprüche

1. Verfahren zum Optimieren, insbesondere Komprimieren, von Übertragungsdaten, bei dem Übertragungsdaten in einem Kommunikationsnetz, insbesondere in einem Mobilfunknetz, von einer Datenquelle über eine Datenverbindung zu einem Datenziel in einem elektronischen Endgerät (11) übertragen werden, wobei zwischen der Datenquelle und dem Datenziel eine Optimierungseinrichtung (13) vorgesehen ist, die die Übertragungsdaten der Datenquelle optimiert, insbesondere komprimiert, und bei dem die optimierten, insbesondere komprimierten Übertragungsdaten von der Optimierungseinrichtung zum Datenziel übertragen werden, **dadurch gekennzeichnet, dass** bei den Übertragungsdaten vor deren Optimierung, insbesondere Komprimierung, ein Daten-Qualitätsanalyseprozess durchgeführt wird, bei dem die Qualität der Übertragungsdaten analysiert wird, ob die Eigenschaften und Merkmale der Übertragungsdaten bezüglich ihrer Eignung festgelegte und/oder vorausgesetzte Erfordernisse erfüllen, dass auf Basis der durchgeführten Daten-Qualitätsanalyse ein auf die Übertragungsdaten bezogener individueller Optimierungsgrad, insbesondere Komprimierungsgrad, von der Optimierungseinrichtung (13) ermittelt wird, indem ein Wert für einen Optimierungsgrad für die Übertragungsdaten ermittelt wird, dass der Wert für den Optimierungsgrad von der Optimierungseinrichtung (13) an das elektronische Endgerät (11) übertragen wird, dass vom elektronischen Endgerät (11) eine Anforderungsinformation an die Optimierungseinrichtung (13) übertragen wird, dass nach Empfang der Anforderungsinformation die Übertragungsdaten anhand des übertragenen Werts für den Optimierungsgrad in der Optimierungseinrichtung (13) individuell und auf die tatsächlich übertragenen Übertragungsdaten bezogen optimiert, insbesondere komprimiert werden und dass die optimierten Übertragungsdaten anschließend zum Datenziel im elektronischen Endgerät übertragen werden, wobei von dem elektronischen Endgerät (11) oder einer dem elektronischen Endgerät (11) zugeordneten Applikation ein Triggersignal zum Starten des Optimierungsverfahrens erzeugt wird, das Triggersignal an die Optimierungseinrichtung (13) übertragen wird und das Optimierungsverfahren nach Erhalt des Triggersignals in der Optimierungseinrichtung durchgeführt wird.

2. Verfahren zum Optimieren, insbesondere Komprimieren, von Übertragungsdaten, bei dem Übertragungsdaten in einem Kommunikationsnetz, insbesondere in einem Mobilfunknetz, von einer Datenquelle über eine Datenverbindung zu einem Datenziel in einem elektronischen Endgerät (11) übertragen werden, wobei zwischen der Datenquelle und dem Datenziel eine Optimierungseinrichtung (13) vorgesehen ist, die die Übertragungsdaten der Datenquelle optimiert, insbesondere komprimiert, und bei dem die optimierten, insbesondere komprimierten Übertragungsdaten von der Optimierungseinrichtung zum Datenziel übertragen werden, **dadurch gekennzeichnet, dass** bei den Übertragungsdaten vor deren Optimierung, insbesondere Komprimierung, ein Daten-Qualitätsanalyseprozess durchgeführt wird, bei dem die Qualität der Übertragungsdaten analysiert wird, ob die Eigenschaften und Merkmale der Übertragungsdaten bezüglich ihrer Eignung festgelegte und/oder vorausgesetzte Erfordernisse erfüllen, dass während der Daten-Qualitätsanalyse ermittelte Daten-Qualitätswert der Übertragungsdaten von der Optimierungseinrichtung (13) an das elektronische Endgerät (11) übertragen wird, dass im elektronischen Endgerät (11) ein auf die Übertragungsdaten bezogener individueller Optimierungsgrad ermittelt wird, dass der individuelle Optimierungsgrad vom elektronischen Endgerät (11) zu der Optimierungseinrichtung (13) übertragen wird und dass nach Empfang des individuellen Optimierungsgrads die Übertragungsdaten in der Optimierungseinrichtung (13) anhand des individuellen Optimierungsgrads optimiert werden und dass die optimierten Übertragungsdaten anschließend zum Datenziel im elektronischen Endgerät übertragen werden, wobei von dem elektronischen Endgerät (11) oder einer dem elektronischen Endgerät (11) zugeordneten Applikation ein Triggersignal zum Starten des Optimierungsverfahrens erzeugt wird, das Triggersignal an die Optimierungseinrichtung (13) übertragen wird und das Optimierungsverfahren nach Erhalt des Triggersignals in der Optimierungseinrichtung durchgeführt wird.

3. Verfahren nach Anspruch 1 oder 2, **dadurch gekennzeichnet, dass** die Optimierungseinrichtung (13) auf eine Optimierungsdatei zugreift, in der Daten-Qualitätsreferenzwerte mit bestimmten Optimierungsgraden verknüpft sind, dass die Optimierungseinrichtung (13) die bei der Daten-Qualitätsanalyse ermittelten Daten-Qualitätswerte mit den Daten-Qualitätsreferenzwerten vergleicht und dass bei Übereinstimmung eines ermittelten Daten-Qualitätswerts mit einem Daten-Qualitätsreferenzwert die Übertragungsdaten anhand des dem Daten-Qualitätsreferenzwert zugeordneten Optimierungsgrads optimiert werden.

4. Verfahren nach einem der Ansprüche 1 bis 3, **dadurch gekennzeichnet, dass** von dem elektronischen Endgerät (11) oder einer dem elektronischen Endgerät (11) zugeordneten Applikation ein Wert für einen Optimierungsgrad für die Übertragungsdaten ermittelt wird, dass der Wert für den Optimierungsgrad an die Optimierungseinrichtung (13) übertragen wird, und dass nach Empfang des Optimierungsgrads in der Optimierungseinrichtung die Übertragungsdaten in Relation zu dem übertragenen Optimierungsgrad optimiert werden.

5. Verfahren nach einem der Ansprüche 1 bis 4, **dadurch gekennzeichnet, dass** mehrere unterschiedliche Sätze Übertragungsdaten, insbesondere gleichzeitig, von der Datenquelle zur Optimierungseinrichtung (13) übertragen werden und dass die unterschiedlichen Übertragungsdaten jeweils anhand eines eigenen bestimmten individuellen Optimierungsgrads optimiert werden.

6. Verfahren nach einem der Ansprüche 1 bis 5, **dadurch gekennzeichnet, dass** die Übertragung der Übertragungsdaten über einer Server geführt wird, und die Optimierungseinrichtung (13) Bestandteil des Servers ist, oder dass die Übertragung der Übertragungsdaten direkt zwischen der Datenquelle und dem elektronischen Endgerät (11) erfolgt und die Optimierungseinrichtung (13) Bestandteil der Datenquelle und/oder des elektronischen Endgeräts (11) ist.

7. Verfahren nach einem der Ansprüche 1 bis 6, **dadurch gekennzeichnet, dass** dieses zum Optimieren von Übertragungsdaten in Form von Bilddaten und/oder Videodaten und/oder Audiodaten und/oder Applet-Daten und/oder Animationsdaten ausgebildet ist.

8. Verfahren nach einem der Ansprüche 1 bis 7, **dadurch gekennzeichnet, dass** der Daten-Qualitätsanalyseprozess in Form eines Bildanalyseprozesses und/oder eines Prozesses zur Analyse der Auflösung und/oder eines Prozesses zur Analyse der Dateigröße und/oder eines Prozesses zur Analyse der Übertragungsrate ausgebildet ist.

9. Verfahren nach einem der Ansprüche 1 bis 8, **dadurch gekennzeichnet, dass** die Übertragung der Übertragungsdaten über einen Datenkanal (12), insbesondere einen nativen Signalisierungskanal, erfolgt.

10. System, aufweisend eine Optimierungseinrichtung (13), insbesondere Komprimierungseinrichtung, sowie ein elektronisches Endgerät (11), wobei das System mit Mitteln zur Durchführung des Verfahrens nach einem der Ansprüche 1 bis 9 ausgebildet ist.

11. System nach Anspruch 10, **dadurch gekennzeichnet, dass** die Optimierungseinrichtung (13) in einem Server oder im elektronischen Endgerät (11) vorgesehen ist.

## Claims

1. Method for optimizing, in particular compressing, transmission data, in which transmission data in a communication network, in particular in a mobile radio network, are transmitted from a data source via a data connection to a data destination in an electronic terminal (11), wherein an optimization device (13) is provided between the data source and the data destination, which optimizes, in particular compresses, the transmission data of the data source, and in which the optimized, in particular compressed, transmission data are transmitted from the optimization device to the data destination, **characterized in that** in the transmission data prior to their optimization, in particular compression, a data quality analysis process is performed, by means of which the quality of the transmission data is analysed, whether the characteristics and features of the transmission data fulfil set and/or provided requirements with regard to their suitability, that based on the performed data quality analysis, an individual degree of optimization, in particular degree of compression, related on the transmission data is determined by the optimization device (13), by determining a value for an optimization degree for the transmission data, that the value for the optimization degree is transmitted from the optimization device (13) to the electronic terminal (11), that a request information is transmitted from the electronic terminal (11) to the optimization device (13), that after receipt of the request information, the transmission data, based on the transmitted value for the optimization degree, are optimized, in particular compressed, individually and related to the actually transmitted transmission data, and that the optimized transmission data are subsequently transmitted to the data destination in the electronic terminal, wherein from the electronic terminal (11) or from an application assigned to the electronic terminal (11) a trigger signal for starting the optimization method is generated, wherein the trigger signal is transmitted to the optimization device (13) and wherein the optimization method is carried out after receipt of the trigger signal in the optimization device.

2. Method for optimizing, in particular compressing, transmission data, in which transmission data in a communication network, in particular in a mobile radio network, are transmitted from a data source via a data connection to a data destination in an electronic terminal (11), wherein an optimization device (13) is provided between the data source and the data destination, which optimizes, in particular compresses, the transmission data of the data source, and in which the optimized, in particular compressed, transmission data are transmitted from the optimization device to the data destination, **characterized in that** in the transmission data prior to their optimization, in particular compression, a data quality analysis process is performed, by means of which the quality of the transmission data is analysed, whether the characteristics and features of the transmission data fulfil set and/or provided requirements with regard to their suitability, that a data quality value of the transmission data, which was determined during the data quality analysis, is transmitted from the optimization device (13) to the electronic terminal (11), that an individual optimization degree related on the transmission data is determined in the electronic terminal (11), that the individual optimization degree is transmitted from the electronic terminal (11) the optimization device (13), and that after receipt of the individual optimization degree, the transmission data are optimized in the optimization device (13) by means of the individual optimization degree, and that the optimized transmission data are subsequently transmitted to the data destination in the electronic terminal, wherein from the electronic terminal (11) or from an application assigned to the electronic terminal (11) a trigger signal for starting the optimization method is generated, wherein the trigger signal is transmitted to the optimization device (13) and wherein the optimization method is carried out after receipt of the trigger signal in the optimization device.

3. Method according to Claim 1 or 2, **characterized in that** the optimization device (13) accesses an optimization file, in which data quality reference values are linked to specific optimization degrees, that the optimization device (13) compares the data quality values, which have been determined during the data quality analysis, with the data quality reference values and that, when a determined data quality value matches a data quality reference value, the transmission data are optimized based on the degree of optimization associated with the data quality reference value.

4. Method according to anyone of claims 1 to 3, **characterized in that** a value for an optimization degree for the transmission data is determined by the electronic terminal (11) or by an application assigned to the electronic terminal (11) and that the value for the optimization degree is transmitted to the optimization device (13), and that after receipt of the optimization degree in the optimization device (13) the transmission data are optimized in relation to the transmitted optimization degree.

5. Method according to anyone of Claims 1 to 4, **characterized in that** a plurality of different sets of transmission data, in particular simultaneously, are transmitted from the data source to the optimization device (13) and that the different transmission data are each optimized on the basis of an own specific individual optimization degree.

6. Method according to anyone of claims 1 to 5, **characterized in that** the transmission of the transmission data is performed via a server, and the optimization device (13) is part of the server, or that the transmission of the transmission data is performed directly between the data source and the electronic terminal (11) and the optimization device (13) is part of the data source and/or of the electronic terminal (11).

7. Method according to anyone of claims 1 to 6, **characterized in that** it is configured for optimizing transmission data in the form of image data and/or video data and/or audio data and/or applet data and/or animation data.

8. Method according to anyone of claims 1 to 7, **characterized in that** the data quality analysis process is provided in the form of an image analysis process and/or a process for analysing the resolution and/or a process for analysing the file size and/or a process for analysing the transmission rate.

9. Method according to any one of Claims 1 to 8, **characterized in that** the transmission of the transmission data takes place via a data channel (12), in particular a native signalling channel.

10. System, comprising an optimization device (13), in particular a compression device, and an electronic terminal (11), wherein the system is comprised with means for performing the method according to anyone of claims 1 to 9.

11. System according to claim 10, **characterized in that** the optimization device (13) is provided in a server or in the electronic terminal (11).

## Revendications

1. Procédé d'optimisation, en particulier de compression, de données de transmission, dans lequel des données de transmission sont transmises dans un réseau de communication, en particulier dans un réseau de radiocommunication mobile, d'une source de données par le biais d'une liaison de données à une destination de données dans un appareil terminal électronique (11), dans lequel entre la source de données et la destination de données est prévu un dispositif d'optimisation (13) qui optimise, en particulier compresse, les données de transmission de la source de données, et dans lequel les données de transmission optimisées, en particulier comprimées, sont transmises par le dispositif d'optimisation à la destination de données, **caractérisé en ce que**, au niveau des données de transmission avant leur optimisation, en particulier leur compression, est exécuté un processus d'analyse de qualité des données, dans lequel la qualité des données de transmission est analysée pour savoir si les propriétés et les caractéristiques des données de transmission satisfont des exigences fixées et/ou présupposées en ce qui concerne leur aptitude, **en ce que**, sur la base de l'analyse de qualité des données exécutée, un degré d'optimisation, en particulier un degré de compression, individuel relatif aux données de transmission, est déterminé par le dispositif d'optimisation (13) **en ce qu'**une valeur pour un degré d'optimisation est déterminée pour les données de transmission, **en ce que** la valeur pour le degré d'optimisation est transmise par le dispositif d'optimisation (13) à l'appareil terminal électronique (11), **en ce qu'**une information de demande est transmise par l'appareil terminal électronique (11) au dispositif d'optimisation (13), **en ce que**, après la réception de l'information de demande, les données de transmission sont optimisées, en particulier comprimées, à l'aide de la valeur transmise pour le degré d'optimisation dans le dispositif d'optimisation (13) de manière individuelle et relativement aux données de transmission réellement transmises, et **en ce que** les données de transmission optimisées sont ensuite transmises à la destination de données dans l'appareil terminal électronique, dans lequel un signal de déclenchement pour démarrer le procédé d'optimisation est généré par l'appareil terminal électronique (11) ou par une application associée à l'appareil terminal électronique (11), le signal de déclenchement est transmis au dispositif d'optimisation (13) et le procédé d'optimisation est exécuté dans le dispositif d'optimisation après l'obtention du signal de déclenchement.

2. Procédé d'optimisation, en particulier de compression, de données de transmission, dans lequel des données de transmission sont transmises dans un réseau de communication, en particulier dans un réseau de radiocommunication mobile, d'une source de données par le biais d'une liaison de données à une destination de données dans un appareil terminal électronique (11), dans lequel entre la source de données et la destination de données est prévu un dispositif d'optimisation (13) qui optimise, en particulier compresse, les données de transmission de la source de données, et dans lequel les données de transmission optimisées, en particulier compressées, sont transmises par le dispositif d'optimisation à la destination de données, **caractérisé en ce que**, au niveau des données de transmission avant leur optimisation, en particulier leur compression, est exécuté un processus d'analyse de qualité des données, dans lequel la qualité des données de transmission est analysée pour savoir si les propriétés et les caractéristiques des données de transmission satisfont des exigences fixées et/ou présupposées en ce qui concerne leur aptitude, **en ce qu'**une valeur de qualité de données des données de transmission, déterminée lors de l'analyse de qualité des données, est transmise par le dispositif d'optimisation (13) à l'appareil terminal électronique (11), **en ce que** dans l'appareil terminal électronique (11) est déterminé un degré d'optimisation individuel relatif aux données de transmission, **en ce que** le degré d'optimisation individuel est transmis par l'appareil terminal électronique (11) au dispositif d'optimisation (13) et **en ce que**, après la réception du degré d'optimisation individuel, les données de transmission sont optimisées dans le dispositif d'optimisation (13) à l'aide du degré d'optimisation individuel et **en ce que** les données de transmission optimisées sont ensuite transmises à la destination de données dans l'appareil terminal électronique, dans lequel un signal de déclenchement pour le démarrage du procédé d'optimisation est généré par l'appareil terminal électronique (11) ou par une application associée à l'appareil terminal électronique (11), le signal de déclenchement est transmis au dispositif d'optimisation (13) et le procédé d'optimisation est exécuté dans le dispositif d'optimisation après l'obtention du signal de déclenchement.

3. Procédé selon la revendication 1 ou 2, **caractérisé en ce que** le dispositif d'optimisation (13) accède à un fichier d'optimisation dans lequel des valeurs de référence de qualité des données sont liées à des degrés d'optimisation définis, **en ce que** le dispositif d'optimisation (13) compare les valeurs de qualité des données, déterminées lors de l'analyse de qualité des données, aux valeurs de référence de qualité des données et **en ce que**, en cas de concordance d'une valeur de qualité de données déterminée avec une valeur de référence de qualité des données, les données de transmission sont optimisées à l'aide du degré d'optimisation associé à la valeur de référence de qualité des données.

4. Procédé selon l'une quelconque des revendications 1 à 3, **caractérisé en ce qu'**une valeur pour un degré d'optimisation est déterminée pour les données de transmission par l'appareil terminal électronique (11) ou par une application associée à l'appareil terminal électronique (11), **en ce que** la valeur pour le degré d'optimisation est transmise au dispositif d'optimisation (13), et **en ce que**, après la réception du degré d'optimisation dans le dispositif d'optimisation, les données de transmission sont optimisées en relation avec le degré d'optimisation transmis.

5. Procédé selon l'une quelconque des revendications 1 à 4, **caractérisé en ce que** plusieurs ensembles différents de données de transmission sont transmis, en particulier simultanément, de la source de données au dispositif d'optimisation (13) et **en ce que** les données de transmission différentes sont chacune optimisées à l'aide d'un propre degré d'optimisation individuel défini.

6. Procédé selon l'une quelconque des revendications 1 à 5, **caractérisé en ce que** la transmission des données de transmission est menée par le biais d'un serveur, et le dispositif d'optimisation (13) est une partie constituante du serveur, ou **en ce que** la transmission des données de transmission est effectuée directement entre la source de données et l'appareil terminal électronique (11) et le dispositif d'optimisation (13) est une partie constituante de la source de données et/ou de l'appareil terminal électronique (11).

7. Procédé selon l'une quelconque des revendications 1 à 6, **caractérisé en ce que** celui-ci est conçu pour l'optimisation de données de transmission sous forme de données d'image et/ou de données vidéo et/ou de données audio et/ou de données d'appliquettes et/ou de données d'animation.

8. Procédé selon l'une quelconque des revendications 1 à 7, **caractérisé en ce que** le processus d'analyse de qualité des données est conçu sous forme d'un processus d'analyse d'images et/ou d'un processus d'analyse de la résolution et/ou d'un processus d'analyse de la taille d'un fichier et/ou d'un processus d'analyse du débit de transmission.

9. Procédé selon l'une quelconque des revendications 1 à 8, **caractérisé en ce que** la transmission des données de transmission est effectuée par le biais d'un canal de données (12), en particulier d'un canal de signalisation natif.

10. Système, présentant un dispositif d'optimisation (13), en particulier un dispositif de compression, ainsi qu'un appareil terminal électronique (11), dans lequel le système est conçu avec des moyens pour exécuter le procédé selon l'une quelconque des revendications 1 à 9.

11. Système selon la revendication 10, **caractérisé en ce que** le dispositif d'optimisation (13) est prévu dans un serveur ou dans l'appareil terminal électronique (11).
